# EUROPEAN PATENT SPECIFICATION

(11) **EP 4 105 681 B1**
(45) Date of publication and mention of the grant of the patent: **28.06.2023**
(21) Application number: 21305822.5
(22) Date of filing: 16.06.2021
(51) Int. Cl.: G01S 7/48, G01S 7/497, G01S 17/42, G01S 17/931

(54) **METHOD AND SYSTEM FOR FILTERING OUT SENSOR DATA FOR A VEHICLE**
VERFAHREN UND SYSTEM ZUR FILTRIERUNG VON SENSORDATEN FÜR EIN FAHRZEUG
PROCÉDÉ ET SYSTÈME DE FILTRAGE DE DONNÉES DE CAPTEUR POUR UN VÉHICULE

(43) Date of publication of application: 21.12.2022
(73) Proprietor: Easymile, 31000 Toulouse (FR)
(72) Inventor: VEYSSIERE, Bastien, 31400 Toulouse (FR); RAVET, Alexandre, 31400 Toulouse (FR)
(74) Representative: BCF Global

(56) References cited:
- CA-A1- 2 928 262
- US-B2- 9 916 703

## Description

### FIELD

The present technology relates to assistance to vehicles, and more particularly to a method and system for filtering out data acquired from sensors mounted on the vehicle by processing the data after calibration with a reference object.

### BACKGROUND

Today's vehicles, including autonomous, driverless, unmanned or uncrewed, etc. ones, commonly use sensors mounted on the vehicle to detect possible obstacles and allow avoidance behavior, such as a complete stop or a trajectory change, or driver alerts, so as to navigate safely through environments. « Sensor » as used herein, designates an opto-electronic apparatus, such as for example a LIDAR sensor, based on the principle of emitting a lightwave beam, catching the reflections of objects (backscattering) in the field of view, and providing relative position information about reflecting objects, with a given scanning frequency in one or multiple scanning layers (or "rows" in the case of a Flash LIDAR). Canadian patent application 2928262 published July 5, 2012, and entitled "MOBILE ROBOT SYSTEM" describes a mobile robot comprising a speckle camera. Operations for operating the speckle camera include emitting a speckle pattern into a scene and capturing reference images (e.g., of a reference object) at different distances from the speckle emitter, then emitting a speckle pattern onto a target object in the scene and capturing target images of the speckle pattern on the target object, and comparing the target images (of the speckled object) with different reference images to identify a reference pattern that correlates most strongly with the speckle pattern on the target object, and determining an estimated distance range of the target object within the scene.

Sensors are susceptible of detecting objects that turn out not to be true obstacles to the safe trajectory of the vehicle, yielding to « false positives » that trigger unnecessary avoidance behavior or driver alert: for example, objects like grass stems or the like.

There is therefore a need for a method and system for filtering out sensor data so that a vehicle's trajectory may not be unnecessarily affected, automatically or through the driver, by the sensor detection of obj ects that are not true obstacles for the safe trajectory of the vehicle.

### SUMMARY

Various aspects of the present technology provide a method for filtering out sensor data according to claim 1 and dependent claims.

Various aspects of the present technology also provide a system for a vehicle for filtering out sensor data according to claim 8 and dependent claims.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 provides a representation of the present technology in the particular environment of an autonomous vehicle;
Figure 2 illustrates a view of the field by a sensor in the example provided Figure 1, and its filtering out according to the present technology;
Figure 3 presents an overview of the method in the present technology;
Figure 4 illustrates an acquisition set-up according to the present technology;
Figure 5 illustrates a threshold calculation as part of the calibration process according to the present technology;
Figure 6 presents a more detailed view of the method in the present technology;
Figure 7 illustrates a view of the field by a sensor in the example provided Figure 1 with a background object, and result examples after filtering out according to the present technology;
Figure 8 illustrates a view of the field by a sensor in the example provided Figure 1 with an object that is less reflective, and result examples after filtering out according to the present technology; and
Figure 9 illustrates a computing system that may be used in the present technology.

It should be noted that, unless otherwise explicitly specified herein, the drawings are not to scale. Finally, elements that are identical from one drawing to the other bear the same numeral reference across drawings.

### DETAILED DESCRIPTION

The examples and conditional language recited herein are principally intended to aid the reader in understanding the principles of the present technology and not to limit its scope to such specifically recited examples and conditions.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding. These modifications are not an exhaustive list, and a person skilled in the art may make other modifications. Further, where no examples of modifications have been set forth, it should not be interpreted that no modifications are possible and/or that what is described is the sole manner of implementing that element of the present technology.

Moreover, all statements herein reciting implementations of the present technology, as well as specific examples thereof, are intended to encompass both hardware and/or software implementations thereof. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some aspects of the present technology, the processor may be a general purpose processor, such as a central processing unit (CPU) or a processor dedicated to a specific purpose, such as a digital signal processor (DSP). In the aforementioned, explicit use of the term a « processor » should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that « module » may include for example, but without being limitative, computer program logic, computer program instructions, software, stack, firmware, hardware circuitry or a combination thereof which provides the required capabilities.

With these fundamentals in place, we will now consider some non-limiting examples to illustrate various implementations of aspects of the present technology.

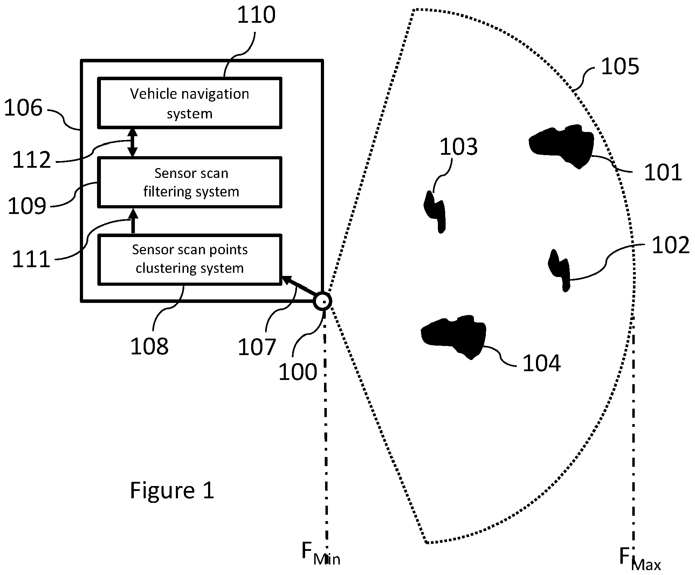

Figure 1 provides a representation of the present technology in the particular environment of an autonomous vehicle. A Sensor 100 is mounted on a vehicle 106, which in this example, is an autonomous one. The Sensor 100 has a field of view 105. The field of view 105 has, depending on the characteristics of the Sensor 100, an operating range [Fₘᵢₙ;Fₘₐₓ]. Field objects 101-104 may be present in the field of view 105. The Sensor 100 may receive reflections (backscattering) from Field objects 101-104, and transform them into for example, depending on the Sensor 100 technology, pointclouds fed (107) to a Sensor scan points clustering system 108. The Sensor scan points clustering system 108 among other things may implement an algorithm to reduce the pointclouds to clusters of points for each one of the Field objects 101-104. The Sensor scan points clustering system 108 may provide information about clusters (111) to a Sensor scan filtering system 109. The Sensor scan filtering system 109 may interact (112) with a Vehicle navigation system 110 that may control speed and trajectory of the autonomous vehicle 106. In the case of a driven vehicle (not shown), the Sensor scan filtering system 109 may instead interact with a control and/or alert center for the vehicle. At the interfaces 111 and 112, various technologies may be had, for example pointclouds or lists of "detected" Field objects 101-104. "Detected" for a field object as used herein, means that information is conveyed at interfaces 111 and/or 112 about the presence of a field object in the field of view 105, including at least information about the position of the field object relative to the Sensor 100.

Smaller objects 102 and 103 may, as the case may be, not constitute true obstacles for the safe trajectory of autonomous vehicle 106, even if present on its path. For example, smaller objects 102 and 103 may be grass stems. Detection of such smaller objects 102 and 103 should not result in the autonomous vehicle 106 automatically slowing down, making a stop or otherwise changing trajectory. On the other hand, larger Field objects 101 and 104 may constitute true obstacles that warrant and should trigger avoidance navigation control (brake, steer, etc.) by the Vehicle navigation system 110. For example, larger Field objects 101 and 104 may be rocks or other objects that are susceptible of damaging the autonomous vehicle 106 or affect the safety of its passengers, or obstacles that should not be run over under any circumstance, such as a body part of a pedestrian. The present technology implemented in the Sensor scan filtering system 109 aims at filtering out points clustered by the Sensor scan points clustering system 108, by removing/rejecting clusters of detected objects that are not true obstacles to the autonomous vehicle 106, using calibrated threshold tables created as described below. This may for example be performed by the Sensor scan filtering system 109:
- if receiving a pointcloud at interface 111: removing/rejecting points from the point cloud and providing a modified pointcloud at interface 112;
- if receiving a list of clustered detected objects at interface 111: removing/rejecting clustered objects from the list and providing a modified list at interface 112.

As will be appreciated by the person skilled in the art, Figure 1 provides merely a logical representation of functions as regard systems 108-110, and the Sensor scan points clustering system 108, the Sensor scan filtering system 109 and the Vehicle navigation system 110 may be physically implemented differently from as represented. For example, and without limitation:
- the Sensor scan points clustering system 108 may be integrated into the Sensor 100;
- the Sensor scan filtering system 109 may be integrated into the Vehicle navigation system 110;
- part or all of the functions in the Sensor scan points clustering system 108, the Sensor scan filtering system 109 or the Vehicle navigation system 110 may not be implemented aboard the autonomous vehicle 106 (but remotely, in the cloud etc.).

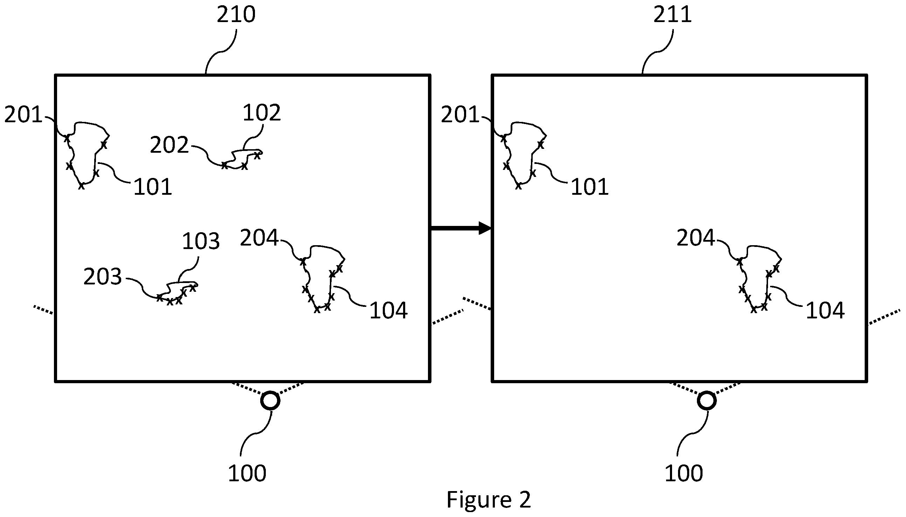

Figure 2 illustrates a view 210 of the field by Sensor 100 in the example provided Figure 1, and its filtering out according to the method of the present technology. The view 210 may be had after (111 on Figure 1) processing by the Sensor scan points clustering system 108 of Figure 1. The view 211 may be had after (112 on Figure 1) processing by the Sensor scan filtering system 109 of Figure 1. In view 210, clusters of points 201-204 are provided by the Sensor scan points clustering system 108 in relation to respectively detected Field objects 101-104 present in the Sensor 100 field of view. In view 211, clusters of points 202 and 203 have been removed/rejected by the Sensor scan filtering system 109, having been recognized according to the present technology as not being true obstacles to the autonomous vehicle 106. This information, exempt of smaller objects 102 and 103, may thus be fed to the Vehicle navigation system 110 of Figure 1, and be taken into consideration so as to not unnecessarily affect the vehicle's 100 trajectory.

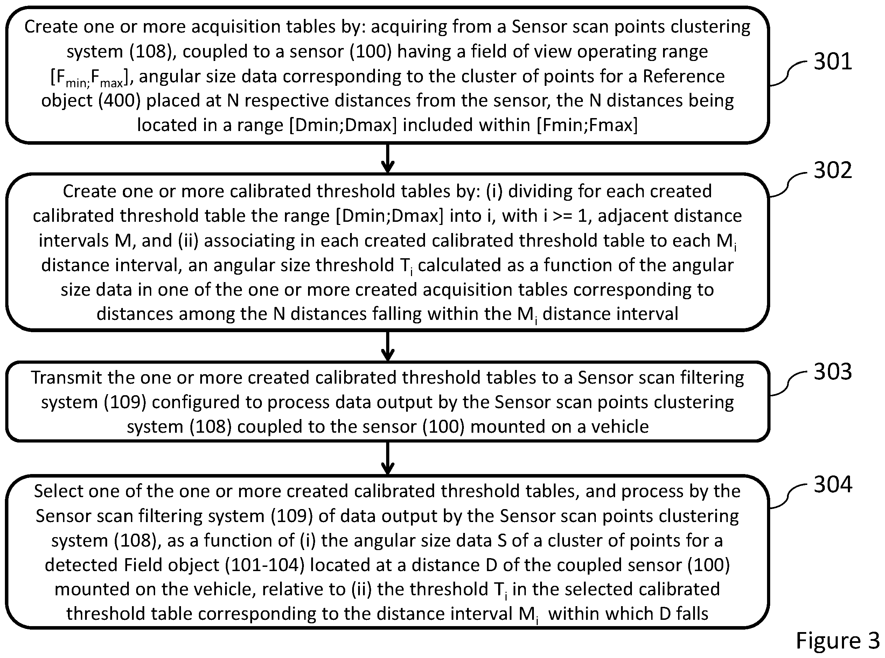

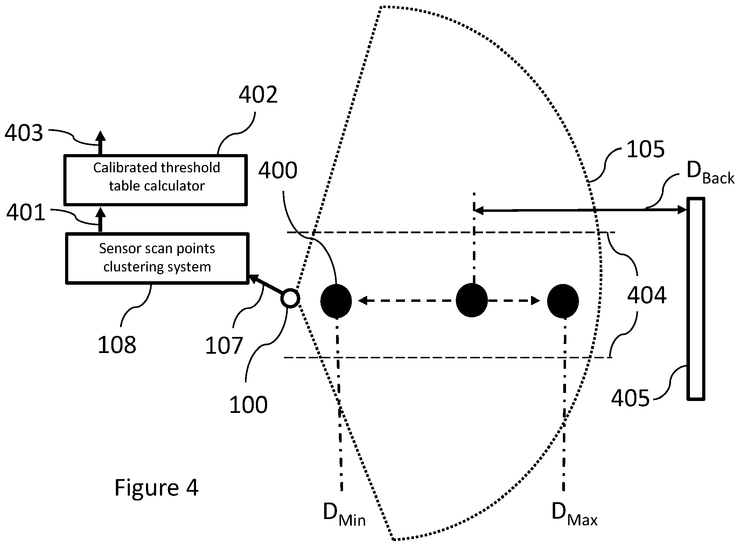

Figure 3 presents an overview of the method in the present technology. At step 301, one or more acquisition tables are created. For each created acquisition table, an acquisition is made, for example through a set-up that is described below in relation to Figure 4, of data from a Sensor scan points clustering system (ie: 108 on Figure 1), coupled to a Sensor (100 on Figure 1) having a field of view operating range [Fₘᵢₙ;Fₘₐₓ] (ie: 105 on Figure 1). These data consists of respective angular sizes of the cluster of points corresponding to a reference object (ie: 400 on Figure 4 below) placed at N distances from the sensor (N being a positive integer of at least 1). The N distances are located in a range [Dₘᵢₙ;Dₘₐₓ] included within [Fₘᵢₙ;Fₘₐₓ]. "Angular size" as used herein equates to the angle formed between two opposite edge points of the cluster generated by the Sensor scan points clustering system upon detection of an object, and the sensor. As will be appreciated by the person skilled in the art, the angular size is straightforwardly correlated to the amount of points in the cluster and the angular resolution of the sensor, in the nominal case of full detection of an object (ie: all lightwave beams intersecting with the object provide a reflection that is captured by the Sensor and contributes to a measure of the relative position of the object).

At step 302, one or more calibrated threshold tables are created. This is performed by, for each created calibrated threshold table
- dividing the range [Dₘᵢₙ;Dₘₐₓ] into i, with i >= 1, distance intervals M: these distance intervals may be adjacent, ie: non overlapping (no intersection), and their sum may be equal to the range [Dₘᵢₙ;Dₘₐₓ]; and
- associating to each distance interval Mᵢ an angular size threshold Tᵢ calculated as a function of the angular sizes that were acquired at step 301 for the reference object at distances among the N that are falling within the distance interval Mᵢ. Optionally, metadata to characterize the created calibrated threshold tables may accompany each one of them, as seen below.

In a very simplified example for illustration purposes, N=8 acquired angular size data (in degrees or radians) for a reference object, may correspond to N=8 distances (of the reference object from the sensor) equally distributed over 1 (Dₘᵢₙ) to 8 (Dₘₐₓ) meters as follows:

**Acquisition table 1**

| Distance from sensor (N=8) | Acquired angular size of reference object |
|---|---|
| 1 | 15 |
| 2 | 9 |
| 3 | 7 |
| 4 | 6 |
| 5 | 5.50 |
| 6 | 5 |
| 7 | 4.75 |
| 8 | 4.60 |

Based on these acquired angular size data, a calibrated threshold table may for example be created for M=4 adjacent and non overlapping distance intervals, that may or may not be evenly distributed within the range [Dₘᵢₙ;Dₘₐₓ]. Each such created calibrated threshold table associates to each distance interval, a calculated threshold. The threshold may be calculated as a function of those acquired angular size data corresponding to distances falling within the associated distance interval. For example, as in calibrated threshold table 1 below, the function is the minimum of the acquired angular size data values at the corresponding distances:

**Calibrated threshold table 1**

| M (m) | Calculated threshold as a function of those N acquired data within range |
|---|---|
| [1-3.99] | 7 |
| [4-5.99] | 5.5 |
| [6-7.50] | 4.75 |
| [7.51-8] | 4.60 |

**Calibrated threshold table 2**

| M(m) | Calculated threshold as a function of those N acquired data within range |
|---|---|
| [1-3.99] | 15 |
| [4-5.99] | 6 |
| [6-7.50] | 5 |
| [7.51-8] | 4.60 |

**Calibrated threshold table 3**

| M (m) | Calculated threshold as a function of those N acquired data within range |
|---|---|
| [1-1.49] | 15 |
| [1.5-2.99] | 9 |
| [3-4.99] | 6.5 |
| [5-8] | 4.96 |

In the case of calibrated threshold table 2 above, the four distance intervals M are the same as those in calibrated threshold table 1. But the function for the calculated threshold is the maximum of the acquired angular size data values at the corresponding distances.

In the case of calibrated threshold table 3 above, the number of distance intervals M is still the same (4), but the intervals are different, and the function for the calculated threshold is an average of the acquired angular size data values at the corresponding distances.

The person skilled in the art will appreciate, that still within the teachings of the present disclosure:
- the N distances for acquired angular size data may or may not be evenly distributed over the range [Dₘᵢₙ;Dₘₐₓ];
- the adjacent distance intervals M may not necessarily be equal in range, and may for example be smaller for distances closer to the sensor; and
- the function for obtaining the calculated threshold may be one of many possibilities of using the acquired angular size data values at corresponding distances, depending on the intended objectives for the safety of navigation of vehicle 106.

At step 303, the one or more created calibrated threshold tables are transmitted to a Sensor scan filtering system (109) configured to process data output by the Sensor scan points clustering system (108) coupled to the Sensor (100) mounted on a vehicle.

At step 304, one of the one or more created calibrated threshold tables is selected and used by the Sensor scan filtering system (109) to process data output by the Sensor scan points clustering system (108). The processing may comprise a function of the angular size data S of a cluster of points for a Field object (101-104), detected by the coupled Sensor (100), and located at a distance D of the coupled Sensor (100) mounted on the vehicle, relative to the threshold Tᵢ in the selected calibrated threshold table corresponding to the distance interval Mᵢ within which D falls.

Optionally, a calibrated threshold table may be selected based on accompanying metadata characterizing its content, as seen below.

The person skilled in the art will appreciate that, still within the teachings of the present disclosure, the datasheets from providers and suppliers of sensors, including when coupled to, or integrated with, Sensor scan points clustering systems as the case may be, may be used to verify and/or complement the empirical results of the acquisition (301) of angular size data for a reference object. For example, in an aspect of the present technology, a calibrated threshold table created through the process described at step 302, may be complemented with thresholds for distance ranges [Fₘᵢₙ;Dₘᵢₙ] and/or [Dₘₐₓ;Fₘₐₓ]. For example, extrapolating threshold values for distance ranges [Fₘᵢₙ;Dₘᵢₙ] and [Dₘₐₓ;Fₘₐₓ] may be performed through a calculation based on the aforementioned datasheets.

It will also be apparent to the person skilled in the art, that still within the teachings of the present disclosure, a calibrated threshold table may encompass, beyond a table with discrete Mᵢ values, a continuous function f of values Mᵢ (ie: the equivalent of a table where i tends to the infinite, and each distance interval Mᵢ tends to zero). The processing of data output by the Sensor scan points clustering system (108) may then comprise a function of the angular size data S of a cluster of points for a Field object (101-104), detected by the coupled Sensor (100), and located at a distance D, relative to f(D). Such a continuous function f may, for example, be calculated by regression analysis of the N values in an acquisition table.

In another aspect, thresholds for distance ranges [Fₘᵢₙ;Dₘᵢₙ] and/or [Dₘₐₓ;Fₘₐₓ] may be set by:
- adopting as threshold for the distance range [Fₘᵢₙ;Dₘᵢₙ] the threshold calculated for the distance Dₘᵢₙ; and/or
- adopting as threshold for the distance range [Dₘₐₓ;Fₘₐₓ] a value of 0 (or a value indicative that no filtering out is to be performed in the range).

Figure 4 illustrates an acquisition set-up according to the present technology. A Reference object 400 may be exposed to the Sensor 100 coupled to a Sensor scan points clustering system 108, at N various distances from the Sensor 100, within a distance range [Dₘᵢₙ;Dₘₐₓ]. The Reference object 400 may be moved in the field of view 105 from Dₘᵢₙ to Dₘₐₓ (or the other way around). Alternatively, the Sensor 100 may be moved relative to the Reference object 400 maintained in fixed position. Alternatively, during acquisition, the Sensor 100 and/or the Reference object 400 may be moved back and forth relative to each other, so as to acquire more points in the same acquisition set-up. As will be appreciated by the person skilled in the art, the number N, and the minimum distance between consecutive of the N points, may depend notably on the acquisition frequency of the Sensor 100 (for example 10Hz), and/or the velocity of the Sensor 100 relative to the Reference object 400.

The acquisition set-up allows to obtain from Sensor scan points clustering system 108, a cluster of points for the Reference object 400 at each of N distances from the Sensor 100 within [Dₘᵢₙ;Dₘₐₓ]. For example, the minimum distance interval between two consecutive of the N distances may be driven by the range resolution of Sensor 100. For example, the maximum distance interval between two consecutive of the N distances may be 1cm. The acquisition information at N successive distances is fed (401) to a Calibrated threshold table calculator 402.

The Calibrated threshold table calculator 402 may use the acquisition information to create one or more acquisition tables of the angular size value of the cluster of points for the Reference object 400, at each of the N distance values. The acquisition table may then be used by the Calibrated threshold table calculator 402 to create one or more calibrated threshold tables, of thresholds calculated from angular size values for the Reference object 400 at distances falling within each one of M adjacent and non overlapping distance intervals within [Dₘᵢₙ;Dₘₐₓ]. For example a minimum distance interval M may be 5cm.

In aspects of the present technology, the calculated threshold for a given distance interval M may be the minimum angular size value of all acquired angular size values for the Reference object 400 at distances falling within that distance interval M. In other aspects, the maximum angular size value may be adopted instead. In yet other aspects, the average of the acquired angular size values for the Reference object 400 at distances falling within that distance interval M, may be adopted instead. Other functions of the acquired angular size values for the Reference object 400 at distances falling within that distance interval M may be used.

Optionally, the acquisition set-up may include a corridor 404 longitudinally extending in the motion direction of the Sensor 100 relative to the Reference object 400. This has the effect of virtually delimiting the trajectories of Sensor 100 and Reference object 400 for acquisition. Such a corridor 404 may be opted for, for example to minimize the post-processing requirements after acquisition with less complex algorithms and fewer computing power requirements. For example, without a corridor 404, clusters of points for objects other than Reference object 400 appearing in the field of view of Sensor 100, may have to be processed.

Optionally, the acquisition set-up may include a Background object (405) placed at a distance D_{Back} from the Reference object (400), and positioned so that the Reference object (400) lies between the Sensor (100) and the Background object (405). Acquisition with a background object brings about technical effects and advantages that are detailed below.

Optionally, the acquisition set-up may involve a Reference object (400) with different reflectivity characteristics. Acquisition with successive reference objects with different reflectivity characteristics brings about technical effects and advantages that are detailed below.

One or more calibrated threshold tables may be created by Calibrated threshold table calculator 402 and be transmitted to the Sensor scan filtering system 109 of Figure 1 at reference 403. For example, calibrated threshold tables may be created using with the acquisition set-up, different Reference objects 400 having different characteristics, such as size (for example, 1, 3, and 5cm, for example for the diameter of a cylinder) and/or reflectivity and/or their distance D_{Back} (for example 80cm) to the Background object (405) when used in the acquisition set-up. For example, different calibrated threshold tables may be created based on different adoptions of range values for the distance intervals M, and/or of the calculation leading to the threshold for the distance intervals M, as explained above.

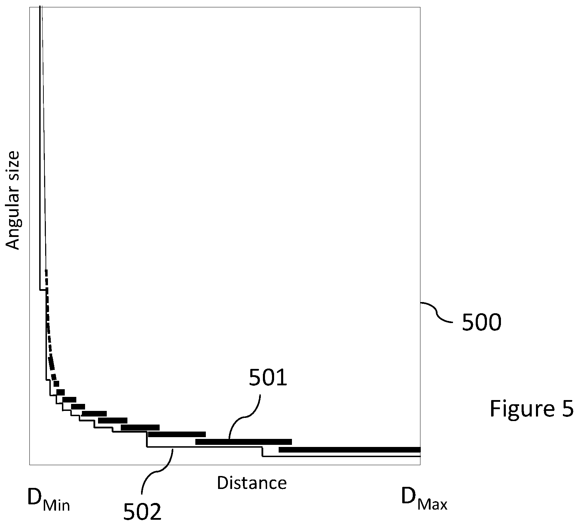

Figure 5 illustrates a threshold calculation as part of the calibration process according to the present technology. In a graph 500, the angular size values for the Reference object 400, as seen by the Sensor 100 within a range of distances [Dₘᵢₙ;Dₘₐₓ] in an acquisition set up according to Figure 4, is plotted as a function 501 of the distance between the Reference object 400 and the Sensor 100. Graph 501 is obtained with data output by the Sensor scan points clustering system 108, and may for example include N points (ie: acquired angular sizes for the Reference object 400 placed at N different distances from the Sensor 100).

From graph 501, a calibrated threshold table may be created comprising i values. A discretization of acquired angular size values may be performed for example by;
- defining i distance intervals M between Dₘᵢₙ and Dₘₐₓ. For example, the distance intervals Mᵢ may be of the same length, for example 5cm, when the maximum distance between two consecutive of the N points is 1cm;
- for each of the distance intervals Mᵢ, calculating a value which is a function of the values for those of the N angular sizes acquired at a distance from the Sensor 100 falling within the particular distance interval M. For example, the function may be the minimum of all such angular size values. The calculated value may then constitute a threshold Tᵢ for that distance interval Mᵢ. The table of thresholds Tᵢ may be represented under the form of graph 502.

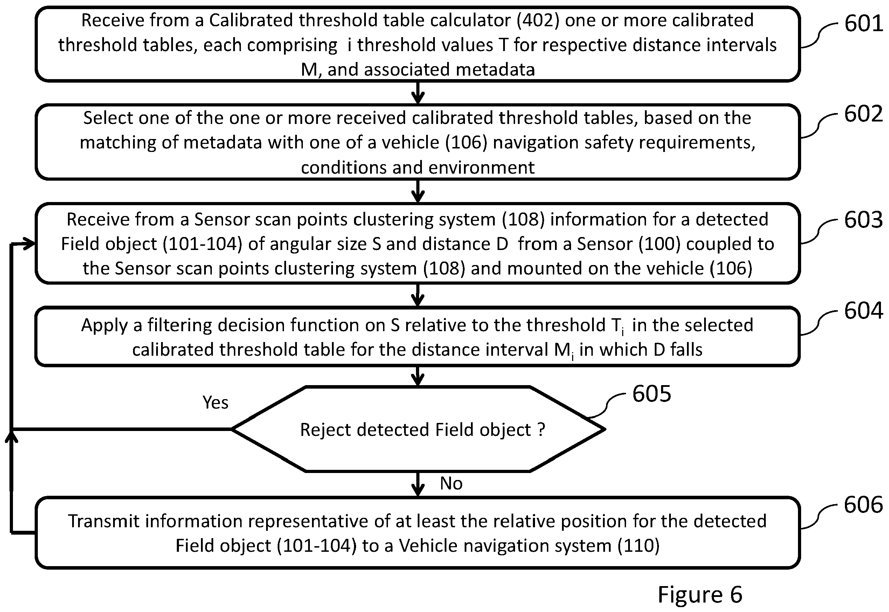

Figure 6 presents a more detailed view of the method in the present technology, specifically in relation to steps 303-304 of Figure 3, when performed by a Sensor scan filtering system 109 connected to a Sensor scan points clustering system 108 coupled to a Sensor 100 mounted on a vehicle 106 as seen Figure 1. At step 601, one or more calibrated threshold tables may be received from a Calibrated threshold table calculator 402 as seen Figure 4. Such calibrated threshold tables may have been created as described above. Each calibrated threshold table may comprise i threshold values T each corresponding to a distance interval M. Metadata about each one of the calibrated threshold tables may also be received, that characterize its content. For example, metadata associated to a calibrated threshold table may:
- precisely describe how such calibrated threshold table was created, describing for example choices of parameters made for the creating acquisition tables (ex: N, Dₘₐₓ values), and/or choices of parameters made for the selection among the created acquisition tables, and/or choices of parameters made for the creating calibrated threshold table (ex: i, Mᵢ and T; values); or
- provide a receiving system more general information about at least one of:
   - the navigation safety requirements for the vehicle 106, that the calibrated threshold table allows to meet; for example, a calibrated threshold table may allow the Sensor scan filtering system 109 to filter out/remove/reject detected field objects that are below a given size, for example 5cm;
   - the navigation weather conditions for the vehicle 106, that the calibrated threshold table allows to meet; for example, a calibrated threshold table may allow the Sensor scan filtering system 109 to more efficiently (ie: without impacting safety) filter out/remove/reject detected field objects in dry, rainy, or snowy conditions;
   - the navigation environment constraints for the vehicle 106, that the calibrated threshold table allows to meet; for example, a calibrated threshold table may allow the Sensor scan filtering system 109 to filter out/remove/reject detected field objects more accurately in a densely populated area, while another calibrated threshold table may be better adapted to an area where no pedestrians are expected, with both tables allowing to meet the same safety standard for the vehicle navigation.

At step 602, the Sensor scan filtering system 109 may select one of the received calibrated threshold tables based on the matching of associated received metadata with one of a vehicle 106 navigation safety requirements, conditions and environment. In an aspect of the present technology, the selecting may be dynamic. For example, while the vehicle 106 is in motion, the selecting may be made/modified:
- when the vehicle 106 encounters certain weather conditions, such as rain or snow accumulation;
- when the vehicle 106 travels during certain periods of the year, when for example bugs, or leaves, are more prone to be around, or during certain times of the day; or
- when the vehicle 106 enters certain geographical areas that are identified to require meeting different safety standards (for example more densely populated areas etc.).

At step 603, the Sensor scan filtering system 109 receives from the Sensor scan points clustering system 108 information relative to detected Field objects 101-104 As seen above, this information takes different forms, to include at least the angular size S and the distance D from the Sensor 100, for the detected Field objects 101-104.

At step 604, the Sensor scan filtering system 109 applies a filtering decision function on the angular size S relative to the threshold Tᵢ indicated in the selected one of the received calibrated threshold tables, as corresponding to the distance interval Mᵢ in which the distance D falls. Based on the result of the filtering decision function, the Sensor scan filtering system 109 may reject (step 605) the detected Field objects 101-104, and loop back to step 603 to receive the next detected Field objects 101-104.

If not rejected, information about the detected Field objects 101-104 is transmitted (step 606) by the Sensor scan filtering system 109 to the Vehicle navigation system 110, including the position of the detected Field objects 101-104 relative to the Sensor 100. As mentioned before, such information may take for example the form of points in a pointcloud, or of listed objects with for example associated approximate geometrical shape. The person skilled in the art will appreciate that in the case of a driven vehicle, this information may be transmitted to some other control or alert center in the vehicle. A loop back to step 603 may be made to receive the next detected Field objects 101-104.

While the above has been described in a simplified serial handling of received detected field objects' information, it will be apparent to the person skilled in the art that information about several simultaneously detected field objects may be received, with a parallel applying of the filtering decision function (step 604), rejecting (step 605) or transmitting of information to the Vehicle navigation system 110 (step 606) on all detected field objects simultaneously or quasi-simultaneously.

According to the invention, the filtering decision function of step 604 consists in comparing the respective values of the angular size S and of the threshold Tᵢ. For example, a detected field object may be rejected if its angular size S is larger than the threshold Tᵢ; in another aspect, it may be rejected if its angular size S is smaller than the threshold Tᵢ. In yet another aspect, the margin with which the angular size S and of the threshold Tᵢ differ may be taken into consideration.

With a further combination of the selecting of a particular received calibrated threshold table (step 602) and the adopting of a particular filtering decision function (step 604), the Sensor scan filtering system 109 may provide assistance to the Vehicle navigation system 110 that is tailored to the vehicle 106 navigation particular safety requirements, conditions and environment. For example, the Sensor scan filtering system 109 may opt to:
- under dry navigation conditions, not reject detected field objects that are larger (filtering decision function: steps 604/605) than 1cm in size (selection of the corresponding calibrated threshold table: step 602); and
- under rainy navigation conditions, reject detected field objects that are smaller (filtering decision function: steps 604/605) than 3cm in size (selection of the corresponding calibrated threshold table: step 602).
While the selecting and the adopting may be dynamically adjusted while the vehicle 106 is in motion.

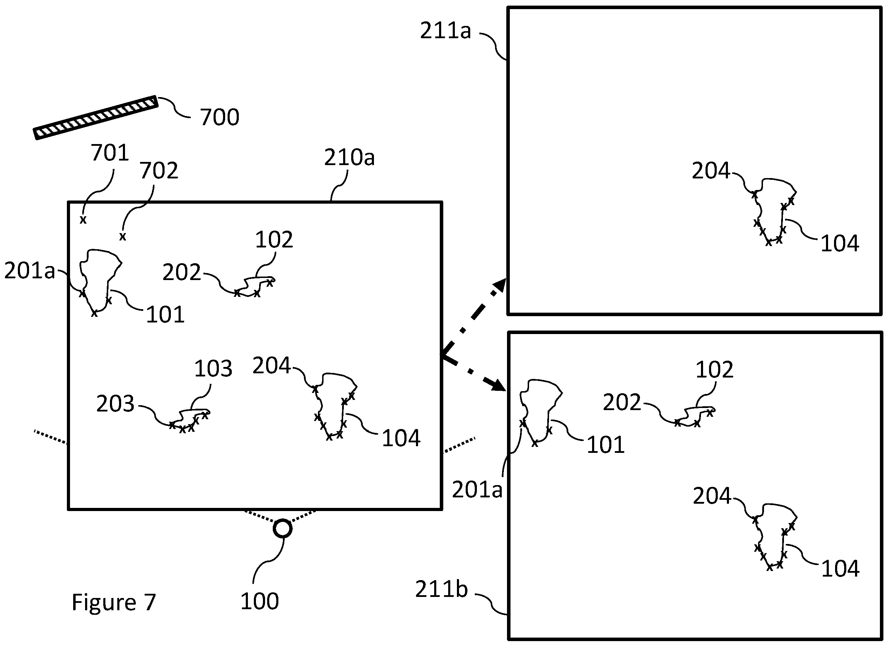

Figure 7 illustrates a view of the field by a sensor in the example provided Figure 1 with a background object, and result examples after filtering out according to the present technology. The view 210a may be had after (111 on Figure 1) processing by the Sensor scan points clustering system 108 of Figure 1. The views 211a and 211b may be had after (112 on Figure 1) processing by the Sensor scan filtering system 109 of Figure 1. In view 210a, clusters of points 201a and 202-204 are provided by the Sensor scan points clustering system 108 in relation to respectively detected Field objects 101-104 present in the Sensor 100 field of view. Field object 101 may lie between the Sensor 100 and a Field background object 700. As will be appreciated by the person skilled in art, depending on Sensor 100 technology, an edge effect, owing to the presence of Field background object 700, may affect the clustering of points for Field object 101, with edge points 701 and 702 appearing at a distance from Sensor 100 between Field object 101 and Field background object 700. This may result in the Field object 101 appearing as a smaller object that does not constitute a true obstacle to the safe trajectory of autonomous vehicle 106.

With the present technology, depending on the combination made of the selecting of a particular received calibrated threshold table (step 602 on Figure 6), the adopting of a particular filtering decision function (step 604 on Figure 6), and the creating of acquisition tables, themselves leading to the creation of the calibrated threshold tables, in a set-up involving a Background object (405 on Figure 4), at least two views of the field may be had 211a and 211b as shown Figure 7.

In view 211a, clusters of points 201a, 202 and 203 have been removed/rejected by the Sensor scan filtering system 109, having been viewed as not being true obstacles to the autonomous vehicle 106. This information, exempt of actual smaller objects 102 and 103, and also of object 101 appearing as a smaller object, may be fed to the Vehicle navigation system 110 of Figure 1.

In view 21 1b, safer navigation may be achieved: cluster of points 203 alone has been removed/rejected by the Sensor scan filtering system 109, having been recognized as not being a true obstacle to the autonomous vehicle 106, while cluster of points 101 in particular has not been removed/rejected. This information, exempt of actual smaller object 103, may be fed to the Vehicle navigation system 110 of Figure 1.

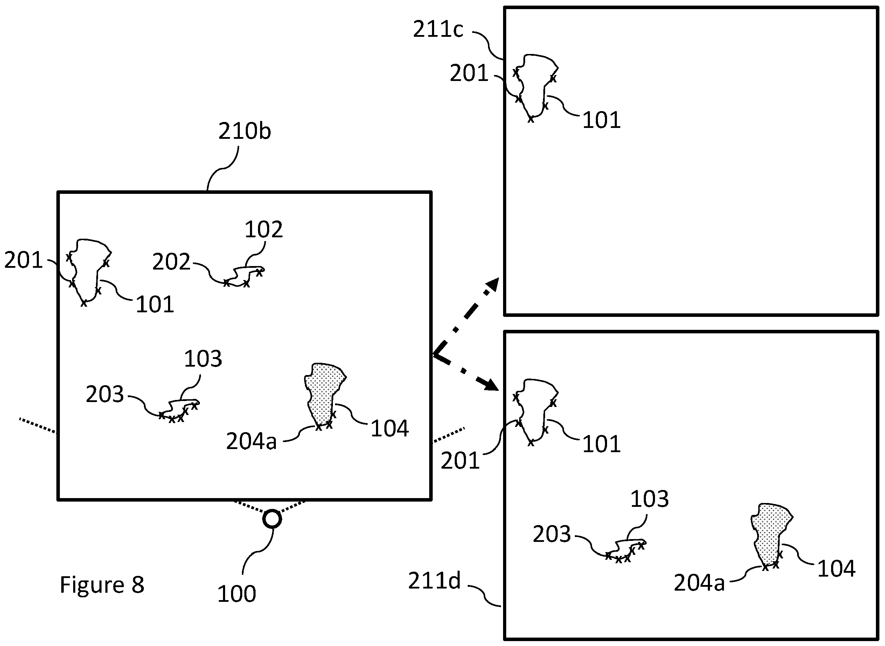

Figure 8 illustrates a view of the field by a sensor in the example provided Figure 1 with an object that is less reflective, and result examples after filtering out according to the present technology. The view 210b may be had after (111 on Figure 1) processing by the Sensor scan points clustering system 108 of Figure 1. The views 211c and 211d may be had after (112 on Figure 1) processing by the Sensor scan filtering system 109 of Figure 1. In view 210b, clusters of points 201-203 and 204a are provided by the Sensor scan points clustering system 108 in relation to respectively detected Field objects 101-104 present in the Sensor 100 field of view. Field object 104 may have a low reflectivity. As will be appreciated by the person skilled in art, depending on Sensor 100 technology, this low reflectivity may affect the clustering of points for Field object 104, with Field object 104 providing fewer points and therefore appearing as a smaller object than it actually is. This may result in the Field object 104 appearing as if a smaller object that does not constitute a true obstacle to the safe trajectory of autonomous vehicle 106.

With the present technology, depending on the combination made of the selecting of a particular received calibrated threshold table (step 602 on Figure 6), the adopting of a particular filtering decision function (step 604 on Figure 6), and the creating of acquisition tables, themselves leading to the creation of the calibrated threshold tables, in a set-up involving successive Reference objects (400 on Figure 4) with different reflectivity characteristics, at least two views of the field may be had 211c and 211d as shown Figure 8.

In view 211c, clusters of points 202, 203 and 204a have been removed/rejected by the Sensor scan filtering system 109, having been viewed as not being true obstacles to the autonomous vehicle 106. This information, exempt of actual smaller objects 102 and 103, and also of object 104 appearing as a smaller object, may be fed to the Vehicle navigation system 110 of Figure 1.

In view 211d, safer navigation may be achieved: cluster of points 202 alone has been removed/rejected by the Sensor scan filtering system 109, having been recognized as not being a true obstacle to the autonomous vehicle 106, while cluster of points 104 in particular has not been removed/rejected. This information, exempt of actual smaller object 102, may be fed to the Vehicle navigation system 110 of Figure 1.

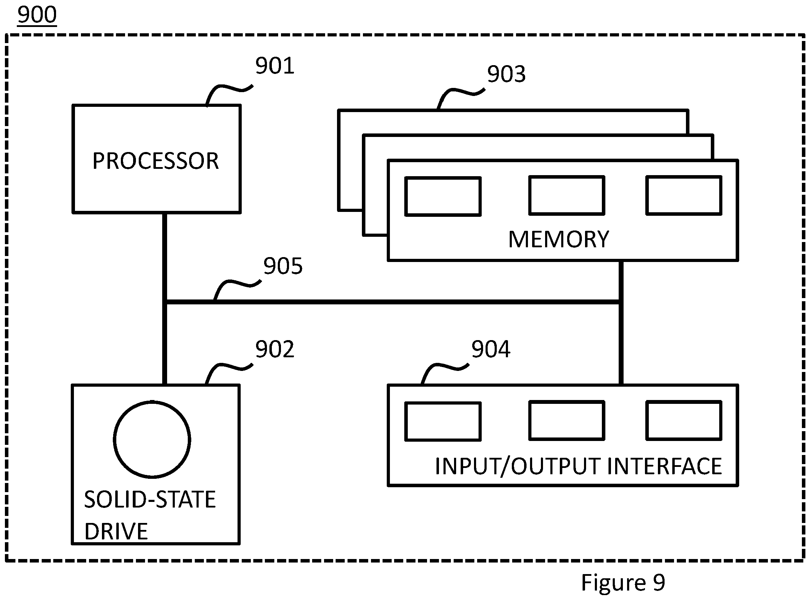

Figure 9 illustrates a computing system that may be used in the present technology. An example of implementation of computing system 900 that may be used for the Sensor scan filtering system 109 is presented. As will be appreciated by the person skilled in the art, such computing system may be implemented in any other suitable hardware, software, and/or firmware, or a combination thereof, and may be a single physical entity, or several separate physical entities with a distributed functionality.

In some aspects of the present technology, the Computing System 900 may comprise various hardware components including one or more single or multi-core processors collectively represented by a processor 901, a solid-state drive 902, a memory 903 and an input/output interface 904. In this context, the processor 901 may or may not be included in a FPGA. In some other aspects, the Computing System 900 may be an "off the shelf' generic computing system. In some aspects, the Computing System 900 may also be distributed amongst multiple systems. The Computing System 900 may also be specifically dedicated to the implementation of the present technology. As a person in the art of the present technology may appreciate, multiple variations as to how the Computing System 900 is implemented may be envisioned without departing from the scope of the present technology.

Communication between the various components of the Computing System 900 may be enabled by one or more internal and/or external buses 905 (e.g. a PCI bus, universal serial bus, IEEE 1394 "Firewire" bus, SCSI bus, Serial-ATA bus, ARINC bus, etc.), to which the various hardware components are electronically coupled.

The input/output interface 904 may allow enabling networking capabilities such as wire or wireless access. As an example, the input/output interface 904 may comprise a networking interface such as, but not limited to, a network port, a network socket, a network interface controller and the like. Multiple examples of how the networking interface may be implemented will become apparent to the person skilled in the art of the present technology. According to implementations of the present technology, the solid-state drive 902 may store program instructions, such as those part of, for example, a library, an application, etc. suitable for being loaded into the memory 903 and executed by the processor 901 for the method and process steps according to the present technology.

While the above-described implementations have been described and shown with reference to particular steps performed in a particular order, it will be understood that these steps may be combined or sub-divided. At least some of the steps may be executed in parallel or in series. Accordingly, the grouping of the steps is not a limitation of the present technology. It should further be expressly understood that not all technical effects mentioned herein need to be enjoyed in each and every aspect of the present technology.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A method for filtering out sensor data, comprising:
- creating one or more acquisition tables comprising acquiring (301) from a Sensor scan points clustering system (108), coupled to an opto-electronic Sensor (100) having a field of view operating range [Fₘᵢₙ;Fₘₐₓ], angular size data of a cluster of points for a Reference object (400) placed at N respective distances from the sensor, the N distances being located in a range [Dₘᵢₙ;Dₘₐₓ] included within [Fₘᵢₙ;Fₘₐₓ], wherein the angular size equates to the angle formed between two opposite edge points of the cluster of points and the opto-electronic Sensor (100);
- creating (302) one or more calibrated threshold tables comprising for each created calibrated threshold table:
- dividing the range [Dₘᵢₙ;Dₘₐₓ] into i, i>=1, adjacent distance intervals M; and
- associating to each Mᵢ distance interval an angular size threshold Tᵢ calculated as a function of the angular size data in one of the one or more created acquisition tables corresponding to distances among the N distances falling within the Mᵢ distance interval;
- transmitting (303) the one or more calibrated threshold tables to a Sensor scan filtering system (109) configured to process data output by the Sensor scan points clustering system (108) coupled to the opto-electronic Sensor (100) mounted on a vehicle (106); and
- selecting (304) one of the one or more transmitted calibrated threshold tables, and
- processing by the Sensor scan filtering system (109) of data output by the Sensor scan points clustering system (108), such data comprising, for a Field object (101-104) detected by the coupled opto-electronic Sensor (100) mounted on the vehicle (106), the angular size data S of the cluster of points for the Field object (101-104), and a distance D of the location of the Field object (101-104) from the coupled opto-electronic Sensor (100), **characterised in that** the processing comprises:
- rejecting or not rejecting (605) the detected Field object (101-104) based on a comparison of the respective values of the angular size data S and the threshold Tᵢ in the selected calibrated threshold table corresponding to the distance interval Mᵢ within which D falls; and
- if the detected Field object (101-104) is not rejected, transmitting to a Vehicle navigation system (110) information representative of at least the relative position of the detected Field object (101-104).

2. The method of claim 1, wherein the creating one or more acquisition tables comprises placing a Background object (405) at a distance D_{Back} from the Reference object (400), and positioned so that the Reference object (400) lies between the opto-electronic Sensor (100) and the Background object (405).

3. The method of claim 2, wherein the creating one or more acquisition tables further comprises using respective Reference objects (400) that differ from one another by at least one of their size, their reflectivity, and their distance D_{Back} to the Background object (405).

4. The method of any of the claims 1 to 3, wherein:
- the transmitting (303, 601) the one or more calibrated threshold tables further comprises transmitting metadata associated to each one of the one or more calibrated threshold tables; and
- the selecting (304, 602) one of the one or more calibrated threshold tables comprises matching one of the metadata with at least one of the vehicle (106) navigation requirements, conditions and environment, and selecting the calibrated threshold table associated to the matched metadata.

5. The method of any of the claims 1 to 4, wherein the adjacent distance intervals M are increasing in range from the distance interval adjacent to Dₘᵢₙ, to the distance interval adjacent to Dₘₐₓ.

6. The method of any of the claims 1 to 5, wherein the angular size threshold Tᵢ is calculated as one of the minimum or the maximum of the angular size data in one of the one or more created acquisition tables corresponding to distances among the N distances falling within the Mᵢ distance interval.

7. The method of any of the claims 1 to 6, wherein:
- the creating (302) one or more calibrated threshold tables further comprises for each created calibrated threshold table, associating to a distance interval [Dₘₐₓ;Fₘₐₓ] an angular size threshold T; and
- the rejecting or not rejecting (605) the detected Field object (101-104) is further based on a comparison of the respective values of the angular size data S and the threshold T in the selected calibrated threshold table if D falls within the distance interval [Dₘₐₓ;Fₘₐₓ].

8. A system for a vehicle (106) for filtering out sensor data, comprising a Sensor scan filtering system (109) configured to process data output by a Sensor scan points clustering system (108) coupled to an opto-electronic Sensor (100) having a field of view operating range [Fₘᵢₙ;Fₘₐₓ], and mounted on the vehicle (106), by:
- receiving one or more calibrated threshold tables, each calibrated threshold table being created by:
- creating (302) one or more acquisition tables, each acquisition table being created by acquiring (301) from the Sensor scan points clustering system (108) coupled to the opto-electronic Sensor (100), angular size data of a cluster of points for a Reference object (400) placed at N respective distances from the sensor, the N distances being located in a range [Dₘᵢₙ;Dₘₐₓ] included within [Fₘᵢₙ;Fₘₐₓ], wherein the angular size equates to the angle formed between two opposite edge points of the cluster of points and the opto-electronic Sensor (100);
- dividing the range [Dₘᵢₙ;Dₘₐₓ] into i, i>=1, adjacent distance intervals M; and
- associating to each Mᵢ distance interval an angular size threshold Tᵢ calculated as a function of the acquired angular size data in one of the one or more acquisition tables corresponding to distances among the N distances falling within the Mᵢ distance interval; and
- selecting (304) one of the one or more received calibrated threshold tables, and processing (304) data output by the Sensor scan points clustering system (108), such data comprising, for a Field object (101-104) detected by the coupled opto-electronic Sensor (100) mounted on the vehicle (106), the angular size data S of the cluster of points for the Field object (101-104), and a distance D of the location of the Field object (101-104) from the coupled opto-electronic Sensor (100),
**characterised in that** the processing comprises:
- rejecting or not rejecting (605) the detected Field object (101-104) based on a comparison of the respective values of the angular size data S and the threshold Tᵢ in the selected calibrated threshold table corresponding to the distance interval Mᵢ within which D falls; and
- if the detected Field object (101-104) is not rejected, transmitting to a Vehicle navigation system (110) information representative of at least the relative position of the detected Field object (101-104).

9. The system of claim 8, wherein the creating one or more acquisition tables comprises placing a Background object (405) at a distance D_{Back} from the Reference object (400), and positioned so that the Reference object (400) lies between the Sensor (100) and the Background object (405).

10. The system of claim 9, wherein the creating one or more acquisition tables further comprises using respective Reference objects (400) that differ from one another by at least one of their size, their reflectivity, and their distance D_{Back} to the Background object (405).

11. The system of any of the claims 8 to 10, wherein the Sensor scan filtering system (109) is further configured to process (304) data output by the Sensor scan points clustering system (108), by:
- receiving (303, 601) metadata associated to each one of the one or more calibrated threshold tables; and
- selecting (304, 602) one of the one or more calibrated threshold tables by matching one of the metadata with at least one of the vehicle (106) navigation requirements, conditions and environment, and selecting the calibrated threshold table associated to the matched metadata.

12. The system of any of the claims 8 to 11, wherein the adjacent distance intervals M are increasing in range from the distance interval adjacent to Dₘᵢₙ, to the distance interval adjacent to Dₘₐₓ.

13. The system of any of the claims 8 to 12, wherein the angular size threshold Tᵢ is calculated as one of the minimum or the maximum of the angular size data in one of the one or more created acquisition tables corresponding to distances among the N distances.

## Patentansprüche

1. Verfahren zum Filtern von Sensordaten, umfassend:
- Erstellen einer oder mehrerer Erfassungstabellen, umfassend Erfassen (301) von Winkelgrößendaten eines Clusters von Punkten für ein Referenzobjekt (400), das sich in N entsprechenden Abständen von dem Sensor befindet, von einem Sensor-Abtastpunkte-Clustersystem (108), das mit einem opto-elektronischen Sensor (100) gekoppelt ist, der einen Sichtfeld-Arbeitsbereich [Fₘᵢₙ;Fₘₐₓ] aufweist, wobei die N Abstände in einem Bereich [Dₘᵢₙ;Dₘₐₓ] liegen, der innerhalb von [Fₘᵢₙ;Fₘₐₓ] beinhaltet ist, wobei die Winkelgröße gleich dem Winkel ist, der zwischen zwei gegenüberliegenden Kantenpunkten des Clusters von Punkten und dem opto-elektronischen Sensor (100) gebildet wird;
- Erstellen (302) einer oder mehrerer kalibrierter Schwellenwerttabellen, umfassend für jede erstellte kalibrierte Schwellenwerttabelle:
- Teilen des Bereichs [Dₘᵢₙ;Dₘₐₓ] in i, i>=l, benachbarte Abstandsintervalle M; und
- Zuordnen eines Winkelgrößen-Schwellenwerts Tᵢ zu jedem Mᵢ Abstandsintervall, der als Funktion der Winkelgrößendaten in einer der einen oder mehreren erstellten Erfassungstabellen berechnet wird, die den Abständen unter den N Abständen entsprechen, die in das Mᵢ Abstandsintervall fallen;
- Übertragen (303) der einen oder mehreren kalibrierten Schwellentabellen an ein Sensor-Abtastfilterungssystem (109), das dazu konfiguriert ist, Daten zu verarbeiten, die von dem Sensor-Abtastpunkte-Clustersystem (108) ausgegeben werden, das mit dem opto-elektronischen Sensor (100) gekoppelt ist, der an einem Fahrzeug (106) montiert ist; und
- Auswählen (304) einer der einen oder mehreren übertragenen kalibrierten Schwellenwerttabellen, und
- Verarbeiten durch das Sensor-Abtastfilterungssystem (109) von Daten, die von dem Sensor-Abtastpunkte-Clustersystem (108) ausgegeben werden, wobei solche Daten für ein Feldobjekt (101-104), das von dem gekoppelten opto-elektronischen Sensor (100), der an dem Fahrzeug (106) montiert ist, erkannt wird, die Winkelgrößendaten S des Clusters von Punkten für das Feldobjekt (101-104) und einen Abstand D der Position des Feldobjekts (101-104) von dem gekoppelten opto-elektronischen Sensor (100) umfassen,
**dadurch gekennzeichnet, dass** das Verarbeiten umfasst:
- Zurückweisen oder Nichtzurückweisen (605) des erkannten Feldobjekts (101-104) basierend auf einem Vergleich der entsprechenden Werte der Winkelgrößendaten S und des Schwellenwerts Tᵢ in der ausgewählten kalibrierten Schwellentabelle entsprechend dem Abstandsintervall Mᵢ, in das D fällt; und
- wenn das erkannte Feldobjekt (101-104) nicht zurückgewiesen wird, Übertragen von Informationen an ein Fahrzeugnavigationssystem (110), die mindestens die relative Position des erkannten Feldobjekts (101-104) darstellen.

2. Verfahren nach Anspruch 1, wobei das Erstellen einer oder mehrerer Erfassungstabellen Platzieren eines Hintergrundobjekts (405) in einem Abstand D_{Back} von dem Referenzobjekt (400) umfasst und so positioniert ist, dass das Referenzobjekt (400) zwischen dem opto-elektronischen Sensor (100) und dem Hintergrundobjekt (405) liegt.

3. Verfahren nach Anspruch 2, wobei das Erstellen einer oder mehrerer Erfassungstabellen ferner Verwenden entsprechender Referenzobjekte (400) umfasst, die sich voneinander durch mindestens eines von ihrer Größe, ihrem Reflexionsvermögen und ihrem Abstand D_{Back} zu dem Hintergrundobjekt (405) unterscheiden.

4. Verfahren nach einem der Ansprüche 1 bis 3, wobei:
- das Übertragen (303, 601) der einen oder mehreren kalibrierten Schwellentabellen ferner Übertragen von Metadaten umfasst, die jeder der einen oder mehreren kalibrierten Schwellentabellen zugeordnet sind; und
- das Auswählen (304, 602) einer der einen oder mehreren kalibrierten Schwellentabellen Abgleichen eines der Metadaten mit mindestens einem von den Navigationsanforderungen des Fahrzeugs (106), den Bedingungen und der Umgebung und Auswählen der kalibrierten Schwellentabelle, die den abgeglichenen Metadaten zugeordnet ist, umfasst.

5. Verfahren nach einem der Ansprüche 1 bis 4, wobei die benachbarten Abstandsintervalle M von dem Abstandsintervall, das benachbart zu Dₘᵢₙ ist, bis zu dem Abstandsintervall, das benachbart zu Dₘₐₓ ist, zunehmen.

6. Verfahren nach einem der Ansprüche 1 bis 5, wobei der Winkelgrößen-Schwellenwert Tᵢ als das Minimum oder das Maximum der Winkelgrößendaten in einer der einen oder mehreren erstellten Erfassungstabellen berechnet wird, die den Abständen unter den N Abständen entsprechen, die in das Abstandsintervall Mᵢ fallen.

7. Verfahren nach einem der Ansprüche 1 bis 6, wobei:
- das Erstellen (302) einer oder mehrerer kalibrierter Schwellentabellen ferner umfasst, für jede erstellte kalibrierte Schwellentabelle, Zuordnen eines Winkelgrößen-Schwellenwerts T zu einem Abstandsintervall [Dₘₐₓ;Fₘₐₓ]; und
- das Zurückweisen oder Nichtzurückweisen (605) des erkannten Feldobjekts (101-104) ferner auf einem Vergleich der entsprechenden Werte der Winkelgrößendaten S und des Schwellenwerts T in der ausgewählten kalibrierten Schwellentabelle basiert, wenn D in das Abstandsintervall [Dₘₐₓ;Fₘₐₓ] fällt.

8. System für ein Fahrzeug (106) zum Filtern von Sensordaten, das ein Sensor-Abtastfilterungssystem (109) umfasst, das dazu konfiguriert ist, Daten zu verarbeiten, die von einem Sensor-Abtastpunkte-Clustersystem (108) ausgegeben werden, das mit einem opto-elektronischen Sensor (100) gekoppelt ist, der einen Sichtfeld-Arbeitsbereich [Fₘᵢₙ;Fₘₐₓ] aufweist, und das an dem Fahrzeug (106) montiert ist, durch:
- Empfangen einer oder mehrerer kalibrierter Schwellentabellen, wobei jede kalibrierte Schwellentabelle erstellt wird durch:
- Erstellen (302) einer oder mehrerer Erfassungstabellen, wobei jede Erfassungstabelle erstellt wird durch Erfassen (301) von Winkelgrößendaten eines Clusters von Punkten für ein Referenzobjekt (400), das sich in N entsprechenden Abständen von dem Sensor befindet, von dem Sensor-Abtastpunkt-Clustersystem (108), das mit dem opto-elektronischen Sensor (100) gekoppelt ist, wobei die N Abstände in einem Bereich [Dₘᵢₙ;Dₘₐₓ] liegen, der innerhalb von [Fₘᵢₙ;Fₘₐₓ] beinhaltet ist, wobei die Winkelgröße gleich dem Winkel ist, der zwischen zwei gegenüberliegenden Kantenpunkten des Clusters von Punkten und dem opto-elektronischen Sensor (100) gebildet wird;
- Teilen des Bereichs [Dₘᵢₙ;Dₘₐₓ] in i, i>=1, benachbarte Abstandsintervalle M; und
- Zuordnen eines Winkelgrößen-Schwellenwerts Tᵢ zu jedem Mᵢ Abstandsintervall, der als Funktion der erfassten Winkelgrößendaten in einer der einen oder mehreren Erfassungstabellen berechnet wird, die den Abständen unter den N Abständen entsprechen, die in das Mᵢ Abstandsintervall fallen; und
- Auswählen (304) einer der einen oder mehreren empfangenen kalibrierten Schwellenwerttabellen und Verarbeiten (304) von Daten, die von dem Sensor-Abtastpunkte-Clustersystem (108) ausgegeben werden, wobei solche Daten für ein Feldobjekt (101-104), das von dem gekoppelten opto-elektronischen Sensor (100), der an dem Fahrzeug (106) montiert ist, erkannt wird, die Winkelgrößendaten S des Clusters von Punkten für das Feldobjekt (101-104) und einen Abstand D der Position des Feldobjekts (101-104) von dem gekoppelten opto-elektronischen Sensor (100) umfassen,
**dadurch gekennzeichnet, dass** das Verarbeiten umfasst:
- Zurückweisen oder Nichtzurückweisen (605) des erkannten Feldobjekts (101-104) basierend auf einem Vergleich der entsprechenden Werte der Winkelgrößendaten S und des Schwellenwerts Tᵢ in der ausgewählten kalibrierten Schwellentabelle entsprechend dem Abstandsintervall Mᵢ, in das D fällt; und
- wenn das erkannte Feldobjekt (101-104) nicht zurückgewiesen wird, Übertragen von Informationen an ein Fahrzeugnavigationssystem (110), die mindestens die relative Position des erkannten Feldobjekts (101-104) darstellen.

9. System nach Anspruch 8, wobei das Erstellen einer oder mehrerer Erfassungstabellen Platzieren eines Hintergrundobjekts (405) in einem Abstand D_{Back} von dem Referenzobjekt (400) umfasst und so positioniert ist, dass das Referenzobjekt (400) zwischen dem Sensor (100) und dem Hintergrundobjekt (405) liegt.

10. System nach Anspruch 9, wobei das Erstellen einer oder mehrerer Erfassungstabellen ferner Verwenden entsprechender Referenzobjekte (400) umfasst, die sich voneinander durch mindestens eines von ihrer Größe, ihrem Reflexionsvermögen und ihrem Abstand D_{Back} zu dem Hintergrundobjekt (405) unterscheiden.

11. System nach einem der Ansprüche 8 bis 10, wobei das Sensor-Abtastfilterungssystem (109) ferner dazu konfiguriert ist, Daten, die von dem Sensor-Abtastpunkte-Clustersystem (108) ausgegeben werden, zu verarbeiten (304), durch:
- Empfangen (303, 601) von Metadaten, die jeder der einen oder mehreren kalibrierten Schwellenwerttabellen zugeordnet sind; und
- Auswählen (304, 602) einer der einen oder mehreren kalibrierten Schwellentabellen durch Abgleichen eines der Metadaten mit mindestens einem von den Navigationsanforderungen des Fahrzeugs (106), den Bedingungen und der Umgebung und Auswählen der kalibrierten Schwellentabelle, die den abgeglichenen Metadaten zugeordnet ist.

12. System nach einem der Ansprüche 8 bis 11, wobei die benachbarten Abstandsintervalle M von dem Abstandsintervall, das benachbart zu Dₘᵢₙ ist, bis zu dem Abstandsintervall, das benachbart zu Dₘₐₓ ist, zunehmen.

13. System nach einem der Ansprüche 8 bis 12, wobei der Winkelgrößen-Schwellenwert Tᵢ als das Minimum oder das Maximum der Winkelgrößendaten in einer der einen oder mehreren erstellten Erfassungstabellen berechnet wird, die den Abständen unter den N Abständen entsprechen.

## Revendications

1. Procédé de filtrage de données de capteur, comprenant :
- la création d'une ou plusieurs tables d'acquisition comprenant l'acquisition (301), à partir d'un système de regroupement de points de balayage de capteur (108), couplé à un capteur optoélectronique (100) ayant une plage de fonctionnement de champ de vision [Fₘᵢₙ;Fₘₐₓ], de données de taille angulaire d'un groupe de points pour un objet de référence (400) placé à N distances respectives du capteur, les N distances étant situées dans une plage [Dₘᵢₙ;Dₘₐₓ] comprise dans [Fₘᵢₙ;Fₘₐₓ], où la taille angulaire est égale à l'angle formé entre deux points de bord opposés du groupe de points et le capteur optoélectronique (100) ;
- la création (302) d'une ou plusieurs tables de seuils étalonnées comprenant pour chaque table de seuils étalonnée créée :
- la division de la plage [Dₘᵢₙ;Dₘₐₓ] en i, i>=1, intervalles de distance adjacents M ; et
- l'association à chaque intervalle de distance Mᵢ d'un seuil de taille angulaire Tᵢ calculé en fonction des données de taille angulaire dans l'une de la ou des tables d'acquisition créées correspondant à des distances parmi les N distances comprises dans l'intervalle de distance Mᵢ ;
- la transmission (303) de la ou des tables de seuils étalonnées à un système de filtrage de balayage de capteur (109) configuré pour traiter des données délivrées en sortie par le système de regroupement de points de balayage de capteur (108) couplé au capteur optoélectronique (100) monté sur un véhicule (106) ; et
- la sélection (304) de l'une de la ou des tables de seuils étalonnées transmises, et
- le traitement par le système de filtrage de balayage de capteur (109) de données délivrées en sortie par le système de regroupement de points de balayage de capteur (108), de telles données comprenant, pour un objet de champ (101-104) détecté par le capteur optoélectronique couplé (100) monté sur le véhicule (106), les données de taille angulaire S du groupe de points pour l'objet de champ (101-104), et une distance D de l'emplacement de l'objet de champ (101-104) par rapport au capteur optoélectronique couplé (100),
**caractérisé en ce que** le traitement comprend :
- le rejet ou le non rejet (605) de l'objet de champ détecté (101-104) sur la base d'une comparaison des valeurs respectives des données de taille angulaire S et du seuil Tᵢ dans la table de seuils étalonnée sélectionnée correspondant à l'intervalle de distance Mᵢ dans lequel se situe D ; et
- si l'objet de champ détecté (101-104) n'est pas rejeté, la transmission à un système de navigation de véhicule (110) d'informations représentatives d'au moins la position relative de l'objet de champ détecté (101-104).

2. Procédé selon la revendication 1, dans lequel la création d'une ou plusieurs tables d'acquisition comprend le placement d'un objet de fond (405) à une distance D_{Back} de l'objet de référence (400), et positionné de sorte que l'objet de référence (400) se trouve entre le capteur optoélectronique (100) et l'objet de fond (405).

3. Procédé selon la revendication 2, dans lequel la création d'une ou plusieurs tables d'acquisition comprend en outre l'utilisation d'objets de référence respectifs (400) qui diffèrent les uns des autres par au moins l'une parmi leur taille, leur réflectivité et leur distance D_{Back} par rapport à l'objet de fond (405).

4. Procédé selon l'une quelconque des revendications 1 à 3, dans lequel :
- la transmission (303, 601) de la ou des tables de seuils étalonnées comprend en outre la transmission de métadonnées associées à chacune de la ou des tables de seuils étalonnées ; et
- la sélection (304, 602) de l'une des une ou plusieurs tables de seuils étalonnées comprend la mise en correspondance de l'une des métadonnées avec au moins l'un parmi les exigences, les conditions et l'environnement de navigation du véhicule (106), et la sélection de la table de seuils étalonnée associée aux métadonnées mises en correspondance.

5. Procédé selon l'une quelconque des revendications 1 à 4, dans lequel les plages des intervalles de distance adjacents M augmentent de l'intervalle de distance adjacent à Dₘᵢₙ à l'intervalle de distance adjacent à Dₘₐₓ.

6. Procédé selon l'une quelconque des revendications 1 à 5, dans lequel le seuil de taille angulaire Tᵢ est calculé comme l'un parmi le minimum ou le maximum des données de taille angulaire dans l'une de la ou des tables d'acquisition créées correspondant à des distances parmi les N distances qui se situent dans l'intervalle de distance Mᵢ.

7. Procédé selon l'une quelconque des revendications 1 à 6, dans lequel :
- la création (302) d'une ou plusieurs tables de seuils étalonnées comprend en outre pour chaque table de seuils étalonnée créée, l'association à un intervalle de distance [Dₘₐₓ; Fₘₐₓ] d'un seuil de taille angulaire T ; et
- le rejet ou le non rejet (605) de l'objet de champ détecté (101-104) est en outre basé sur une comparaison des valeurs respectives des données de taille angulaire S et du seuil T dans la table de seuils étalonnée sélectionnée si D se situe dans l'intervalle de distance [Dₘₐₓ;Fₘₐₓ] .

8. Système pour un véhicule (106) pour le filtrage de données de capteur, comprenant un système de filtrage de balayage de capteur (109) configuré pour traiter des données délivrées en sortie par un système de regroupement de points de balayage de capteur (108) couplé à un capteur optoélectronique (100) ayant une plage de fonctionnement de champ de vision [Fₘᵢₙ; Fₘₐₓ], et monté sur le véhicule (106), par :
- la réception d'une ou plusieurs tables de seuils étalonnées, chaque table de seuils étalonnée étant créée par :
- la création (302) d'une ou plusieurs tables d'acquisition, chaque table d'acquisition étant créée par l'acquisition (301) à partir du système de regroupement de points de balayage de capteur (108) couplé au capteur optoélectronique (100), de données de taille angulaire d'un groupe de points pour un objet de référence (400) placé à N distances respectives du capteur, les N distances étant situées dans une plage [Dₘᵢₙ;Dₘₐₓ] incluse dans [Fₘᵢₙ;Fₘₐₓ], où la taille angulaire est égale à l'angle formé entre deux points de bord opposés du groupe de points et le capteur optoélectronique (100) ;
- la division de la plage [Dₘᵢₙ;Dₘₐₓ] en i, i>=1, intervalles de distance adjacents M ; et
- l'association à chaque intervalle de distance Mᵢ d'un seuil de taille angulaire Tᵢ calculé en fonction des données de taille angulaire acquises dans l'une de la ou des tables d'acquisition correspondant à des distances parmi les N distances qui se situent dans l'intervalle de distance Mᵢ ; et
- la sélection (304) de la ou des tables de seuils étalonnées reçues, et le traitement (304) des données délivrées en sortie par le système de regroupement de points de balayage de capteur (108), de telles données comprenant, pour un objet de champ (101-104) détecté par le capteur optoélectronique couplé (100) monté sur le véhicule (106), les données de taille angulaire S du groupe de points pour l'objet de champ (101-104), et une distance D de l'emplacement de l'objet de champ (101-104) par rapport au capteur optoélectronique couplé (100),
**caractérisé en ce que** le traitement comprend :
- le rejet ou le non rejet (605) de l'objet de champ détecté (101-104) sur la base d'une comparaison des valeurs respectives des données de taille angulaire S et du seuil Tᵢ dans la table de seuils étalonnée sélectionnée correspondant à l'intervalle de distance Mᵢ dans lequel se situe D ; et
- si l'objet de champ détecté (101-104) n'est pas rejeté, la transmission à un système de navigation de véhicule (110) d'informations représentatives d'au moins la position relative de l'objet de champ détecté (101-104).

9. Système selon la revendication 8, dans lequel la création d'une ou plusieurs tables d'acquisition comprend le placement d'un objet de fond (405) à une distance D_{Back} de l'objet de référence (400), et positionné de sorte que l'objet de référence (400) se trouve entre le capteur (100) et l'objet de fond (405).

10. Système selon la revendication 9, dans lequel la création d'une ou plusieurs tables d'acquisition comprend en outre l'utilisation d'objets de référence respectifs (400) qui diffèrent les uns des autres par au moins l'une parmi leur taille, leur réflectivité et leur distance D_{Back} par rapport à l'objet de fond (405).

11. Système selon l'une quelconque des revendications 8 à 10, dans lequel le système de filtrage de balayage de capteur (109) est en outre configuré pour traiter (304) des données délivrées en sortie par le système de regroupement de points de balayage de capteur (108), par :
- la réception (303, 601) de métadonnées associées à chacune de la ou des tables de seuils étalonnées ; et
- la sélection (304, 602) de l'une des une ou plusieurs tables de seuils étalonnées en mettant en correspondance l'une des métadonnées avec au moins l'un parmi les exigences, les conditions et l'environnement de navigation du véhicule (106), et en sélectionnant la table de seuils étalonnée associée aux métadonnées mises en correspondance.

12. Système selon l'une quelconque des revendications 8 à 11, dans lequel les plages des intervalles de distance adjacents M augmentent de l'intervalle de distance adjacent à Dₘᵢₙ à l'intervalle de distance adjacent à Dₘₐₓ.

13. Système selon l'une quelconque des revendications 8 à 12, dans lequel le seuil de taille angulaire Tᵢ est calculé comme l'un parmi le minimum ou le maximum des données de taille angulaire dans l'une de la ou des tables d'acquisition créées correspondant à des distances parmi les N distances.
